# FASCICULE DE BREVET EUROPEEN

(11) **EP 1 112 929 B1**
(45) Date de publication et mention de la délivrance du brevet: **03.12.2003**
(21) Numéro de dépôt: 00403015.1
(22) Date de dépôt: 30.10.2000
(51) Int. Cl.: B64C 7/02, B64D 27/18

(54) **Mât de suspension profilé de voilure d'aéronef**
Profilierter Triebwerkgondelstiel für einen Flugzeugflügel
Streamlined engine pylon for aircraft wing

(30) Priorité: 27.12.1999 FR 9916539
(43) Date de publication de la demande: 04.07.2001
(73) Titulaire: AIRBUS France, 31060 Toulouse (FR)
(72) Inventeur: Cambon, Jean-Louis, 31880 La Salvetat Saint Gilles (FR)
(74) Mandataire: Hauer, Bernard

(56) Documents cités:
- EP-A- 0 432 972
- US-A- 4 067 518
- US-A- 4 712 750
- US-A- 4 867 394

## Description

La présente invention concerne un mât de suspension profilé de voilure d'aéronef.

On sait que certains aéronefs comportent des mâts profilés, suspendus à leur voilure et faisant saillie par rapport à l'intrados de cette dernière. De tels mâts sont destinés à la suspension, sous la voilure, de dispositifs tels que des moteurs, des armes, des réservoirs de carburant, etc ...

Bien entendu, ces mâts et les dispositifs qui leur sont suspendus engendrent des perturbations dans l'écoulement aérodynamique sur la voilure, ce qui se traduit, localement, par une perte de portance et un accroissement de traînée. Ces effets aérodynamiques défavorables sont par ailleurs renforcés, du fait que, pour des raisons structurelles notamment, lesdits mâts, d'une part, présentent une largeur relativement importante et, d'autre part, ont leur bord de fuite au voisinage du bord de fuite de la voilure, un tel voisinage de bords de fuite augmentant les risques de décollement des filets d'air.

Pour remédier à ces inconvénients, on utilise déjà depuis 1986, sur l'avion Airbus A320, un carénage de réduction de perte locale de sustentation aérodynamique due à un tel mât de suspension, ce carénage --qui est par exemple décrit dans le document EP-A-0 432 972-- étant disposé au contact de l'intrados de ladite voilure et s'étendant, d'une part, en hauteur, sur une partie dudit mât et, d'autre part, vers l'arrière de la voilure, en se prolongeant au-delà du bord de fuite de cette dernière. Un tel carénage connu présente la forme approximative d'un parallélépipède droit terminé à l'arrière par une pyramide à pointe arrondie. La surface supérieure du carénage, saillant au-delà du bord de fuite de la voilure, prolonge l'extrados de celle-ci et la largeur dudit carénage correspond à la largeur maximale dudit mât, de sorte que les faces latérales dudit carénage prolongent vers l'arrière la section de largeur maximale dudit mât.

Pour un avion de taille moyenne, ce carénage connu présente des dimensions acceptables. En revanche, pour un avion de grande taille, il est obligatoirement long et volumineux, ce qui engendre de fortes charges aérodynamiques s'exerçant en vol sur ledit carénage. Ceci implique de le rigidifier de sorte qu'il en résulte une augmentation de masse pénalisante.

Par ailleurs, lorsque la voilure comporte des éléments mobiles de bord de fuite, tels que des volets de courbure, ce carénage doit lui-même être mobile. Dans ce cas, pour certaines configurations de vol, le carénage peut se trouver au moins en partie dans le flux d'air chaud d'un moteur --dont la température peut atteindre 700°C-- de sorte qu'il doit alors être réalisé dans des matériaux résistant à la chaleur et dimensionné pour résister à ces températures élevées. Il en résulte donc des contraintes de masse et des coûts supplémentaires de réalisation.

L'objet de la présente invention est de remédier à ces inconvénients.

A cette fin, selon l'invention, le mât de suspension de voilure d'aéronef, ladite voilure comportant un intrados dont la partie arrière est concave et en retrait par rapport à sa partie avant et ledit mât :
- pouvant être suspendu à ladite voilure en faisant saillie par rapport audit intrados de la voilure et étant profilé pour comporter, entre son bord d'attaque et son bord de fuite, une section de largeur maximale ; et
- étant pourvu d'un carénage de réduction de perte locale de sustentation aérodynamique qui :
   . est apte à être disposé au contact de l'intrados de ladite voilure et s'étend en hauteur sur une partie dudit mât ;
   . s'étend vers l'arrière de la voilure, avec des faces latérales en prolongement aérodynamique de la section de largeur maximale dudit mât ; et
   . se prolonge à l'arrière de la voilure, au-delà du bord de fuite de celle-ci, par une partie arrière saillante ayant une surface supérieure en prolongement aérodynamique de l'extrados de ladite voilure,
est remarquable :
- en ce que ladite section de largeur maximale dudit mât est disposée à l'avant de ladite partie arrière, concave et en retrait, de l'intrados de la voilure ; et
- en ce que ledit carénage de réduction de perte locale de sustentation aérodynamique :
   . est apte à être logé, au moins pour la plus grande part de sa hauteur, dans la concavité de ladite partie arrière de l'intrados de la voilure, et
   . comporte une face inférieure qui se rapproche de ladite surface supérieure en prolongement aérodynamique de l'extrados de la voilure pour donner, à ladite partie arrière saillante dudit carénage, la forme d'une lame s'amincissant vers l'arrière et terminée par un bord de fuite aérodynamique.

Ainsi, grâce à la présente invention, on obtient un carénage plat de faibles dimensions qui permet de résoudre les problèmes du carénage connu, mentionnés ci-dessus. On remarquera que le bord de fuite aérodynamique dudit carénage permet de réduire considérablement la longueur de la partie saillante de celui-ci au-delà du bord de fuite de la voilure pour une efficacité aérodynamique du même ordre. L'expérience a montré que la présente invention permet de réduire d'environ 80% la hauteur du carénage et d'environ 50% la longueur de ladite partie saillante de celui-ci par rapport à ce carénage connu, à efficacité aérodynamique sensiblement égale vis-à-vis des risques de décollements des filets d'air au bord de fuite du mât et des problèmes de perte de portance. Une telle réduction des dimensions permet donc d'éviter les inconvénients de masse et d'encombrement mentionnés ci-dessus et, dans le cas d'un carénage mobile proche du flux chaud d'un moteur, de réduire les contraintes de dimensionnement et de nature des matériaux à utiliser.

Pour augmenter encore la limitation en épaisseur du carénage conforme à la présente invention, il est avantageux que sa face inférieure soit concave.

En ce qui concerne le bord de fuite de la partie arrière du carénage, plusieurs modes de réalisation sont prévus par la présente invention. Par exemple :
- les faces latérales de la partie arrière saillante du carénage peuvent, tout comme celles de la partie du carénage se trouvant en regard de l'intrados, être au moins approximativement parallèles entre elles, en prolongement de la section de largeur maximale du mât. Dans ce cas, le bord de fuite du carénage est allongé, par exemple rectiligne, et il peut être au moins sensiblement parallèle au bord de fuite local de la voilure ;
- ou bien, en variante, les faces latérales de la partie arrière saillante du carénage peuvent, contrairement à celles de la partie du carénage se trouvant en regard de l'intrados, converger l'une vers l'autre en direction de l'arrière. Dans ce cas, lesdites faces latérales peuvent être convexes et elles peuvent définir, pour ledit carénage, soit un bord de fuite relativement allongé, par exemple rectiligne, soit un bord de fuite au moins sensiblement ponctuel.

Quel que soit le mode de réalisation du bord de fuite du carénage, il va de soi qu'il faut veiller à ce que la forme de la partie arrière saillante de ce dernier n'entraîne pas des décollements des filets d'air, ce qui augmenterait la traînée.

Par ailleurs, afin d'éviter que la partie arrière saillante du carénage conforme à la présente invention soit noyée dans les effets visqueux de la couche limite au voisinage du bord de fuite de la voilure --ce qui réduirait notablement l'efficacité aérodynamique dudit carénage--, il est important que, audit bord de fuite de la voilure, l'épaisseur dudit carénage soit supérieure à l'épaisseur de la couche limite de l'écoulement aérodynamique sur ladite voilure.

Les figures du dessin annexé feront bien comprendre comment l'invention peut être réalisée. Sur ces figures, des références identiques désignent des éléments semblables.

Les figures 1 et 2 montrent respectivement, en vue de côté et en vue de dessus, un exemple schématique de mât de suspension conforme à la présente invention, destiné à supporter un moteur sous la voilure d'un avion.

Les figures 3 à 8 sont des vues en section agrandies, correspondant respectivement aux lignes de coupe III-III à VIII-VIII de la figure 1.

La figure 9 montre, à plus grande échelle, la partie supérieure de la figure 1.

La figure 10 est une vue partielle, en perspective de l'arrière et du dessus, du mode de réalisation de la partie arrière saillante du carénage illustré par les figures 1 et 9.

La figure 11 est une vue partielle, en perspective de l'arrière et du dessous, du mode de réalisation de la figure 10.

La figure 12 est une vue partielle, en perspective de l'arrière et du dessus, d'une variante de réalisation de la partie arrière du carénage conforme à la présente invention.

La figure 13 est une vue partielle, en perspective de l'arrière et du dessous, de la variante de réalisation de la figure 12.

La figure 14 est un diagramme illustrant l'action aérodynamique du carénage conforme à la présente invention.

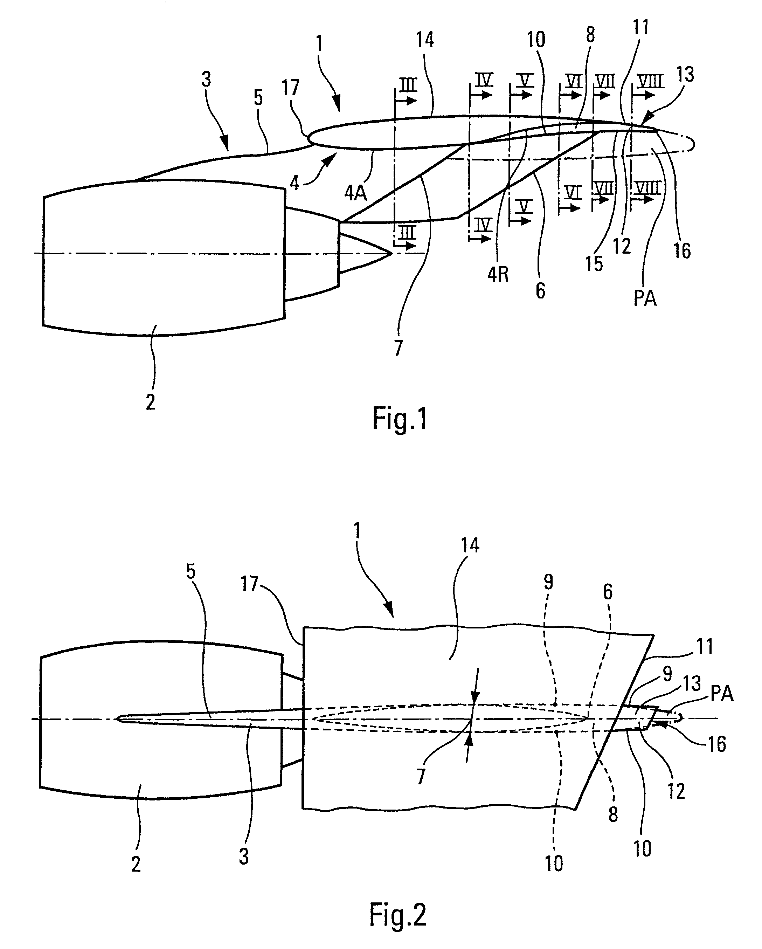

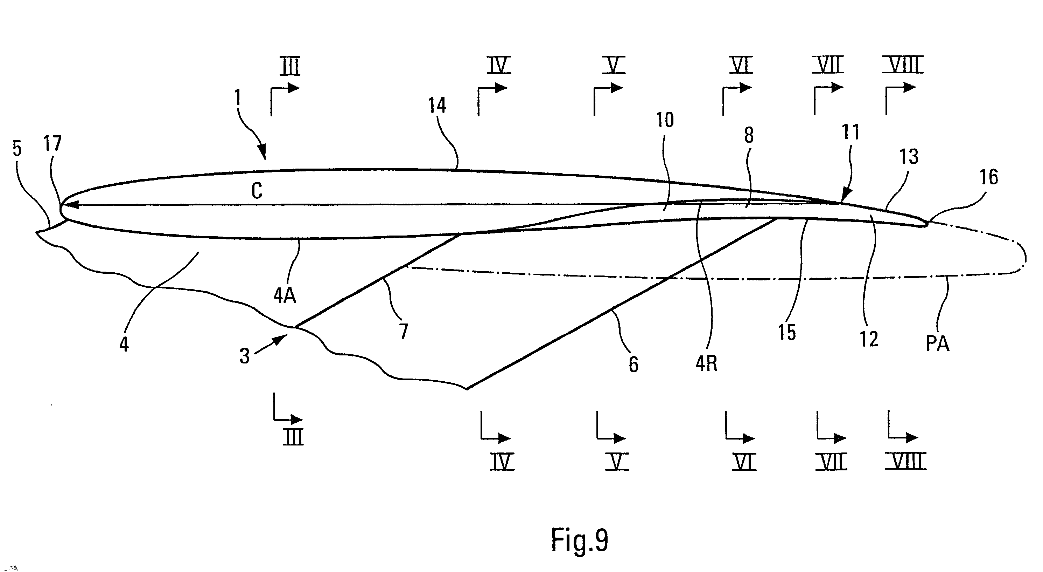

Sur les figures 1 et 2, on a représenté une portion de la voilure 1 d'un avion, au voisinage d'un moteur 2 de ce dernier. Ce moteur 2 est suspendu à la voilure 1 par l'intermédiaire d'un mât de suspension 3, qui fait saillie par rapport à l'intrados 4 de la voilure 1. Comme on peut le voir sur la figure 1, ainsi qu'également sur la figure 9, la voilure 1 comporte une partie avant (du côté du bord d'attaque 17) épaisse et une partie arrière (du côté du bord de fuite 11) mince du fait que l'intrados 4 comporte une partie arrière 4R concave et en retrait par rapport à sa partie avant 4A.

Le mât de suspension 3, lui-même suspendu à la voilure 1 de manière connue et non représentée, est profilé et il comporte un bord d'attaque 5 et un bord de fuite 6 et, entre ceux-ci, une section 7 de largeur maximale. (La largeur du mât 3 est la dimension de ce dernier qui est au moins sensiblement parallèle à l'envergure de la voilure 1, c'est-à-dire orthogonale au plan des figures 1 et 9). Dans l'exemple représenté sur les figures, la section 7 n'est pas verticale, mais fortement inclinée vers l'avant, du haut vers le bas. Par ailleurs, ladite section de largeur maximale 7 du mât 3 est disposée à l'avant de la partie arrière 4R, concave et en retrait, de l'intrados 4 de la voilure 1.

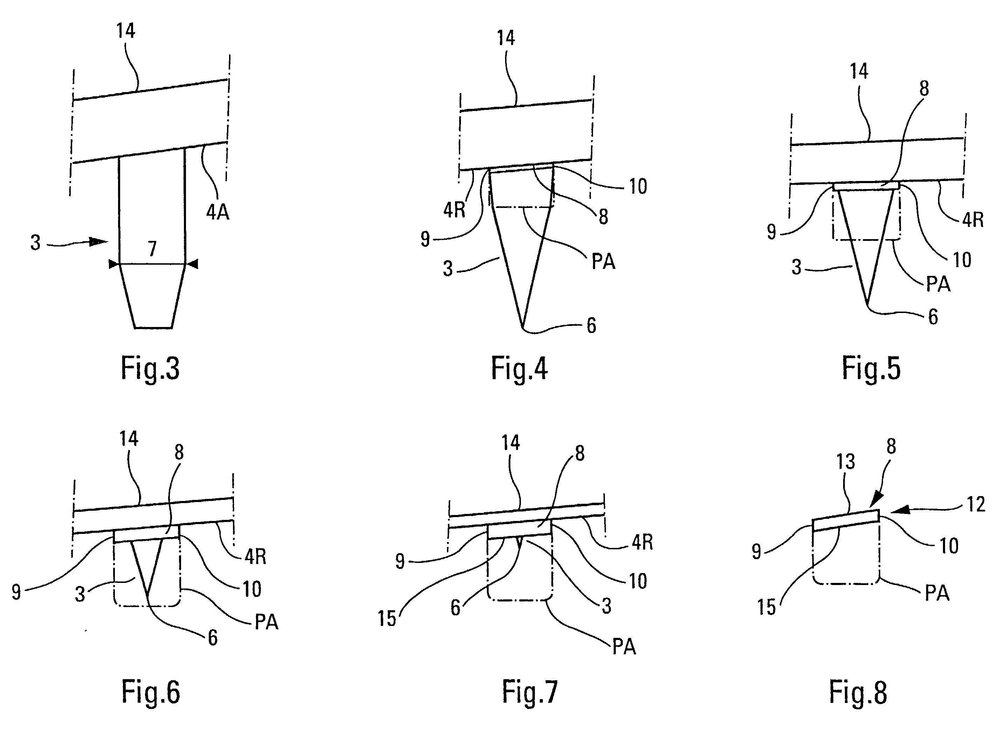

De plus, le mât de suspension 3 est pourvu d'un carénage 8 (voir également les figures 4 à 13), destiné à réduire la perte locale de portance et l'accroissement local de traînée engendrés par le mât 3. Ce carénage 8 est plat et est disposé au contact de l'intrados 4 de la voilure 1, en ne s'étendant que sur une faible partie de la hauteur dudit mât 3. Plus précisément, le carénage 8 est logé, au moins pour la plus grande part de sa hauteur, dans la concavité de la partie arrière 4R de l'intrados 4 de la voilure 1.

Le carénage plat 8 s'étend vers l'arrière de la voilure 1 avec des faces latérales parallèles 9 et 10 en prolongement de la section 7 de largeur maximale du mât 3 et se prolonge à l'arrière de la voilure 1, au-delà du bord de fuite 11 de cette dernière, par une partie arrière saillante 12, dont la surface supérieure 13 est en prolongement de l'extrados 14 de la voilure 1.

De plus, la face inférieure 15 du carénage 8, au moins dans sa partie arrière, est concave et se rapproche de la face supérieure 13 pour donner à ladite partie arrière saillante 12 la forme d'une lame s'amincissant vers l'arrière et terminée par un bord de fuite 16.

Dans le mode de réalisation du carénage 8 illustré par les figures 2 à 11, les faces latérales 9 et 10 restent parallèles entre elles, en prolongement de la section 7, même dans la partie arrière saillante 12 dudit carénage 8. Il en résulte que le bord de fuite 16 correspondant de cette partie arrière 12 est allongé, et même rectiligne dans l'exemple représenté. Comme l'illustrent les figures 2, 10 et 11, le bord de fuite rectiligne 16 est alors avantageusement parallèle au bord de fuite local 11 de la voilure 1.

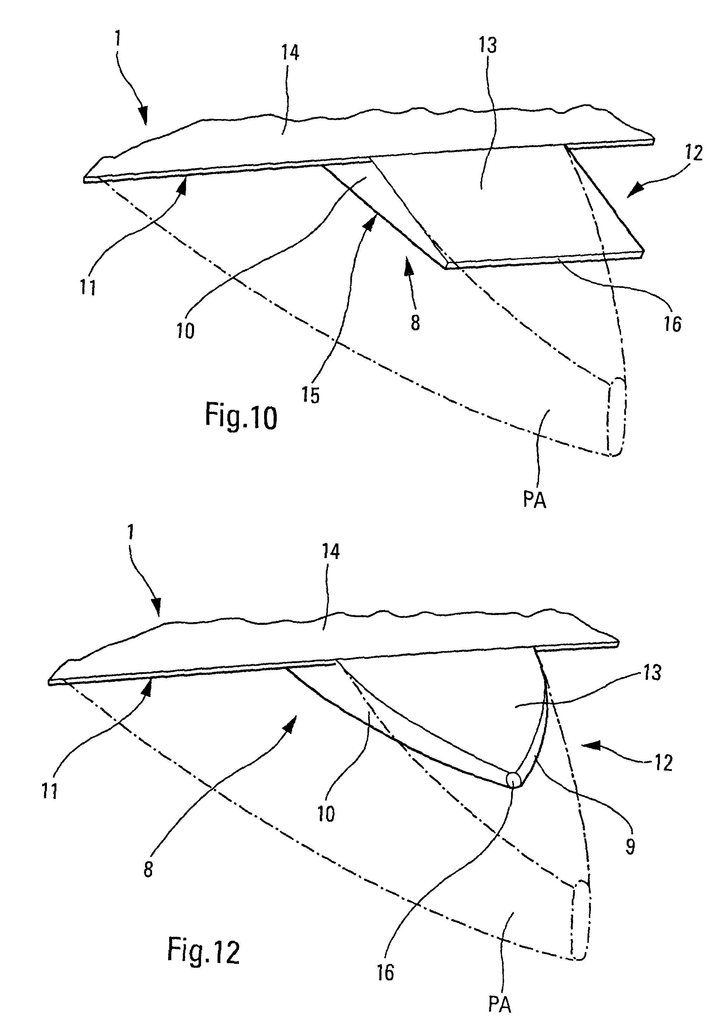

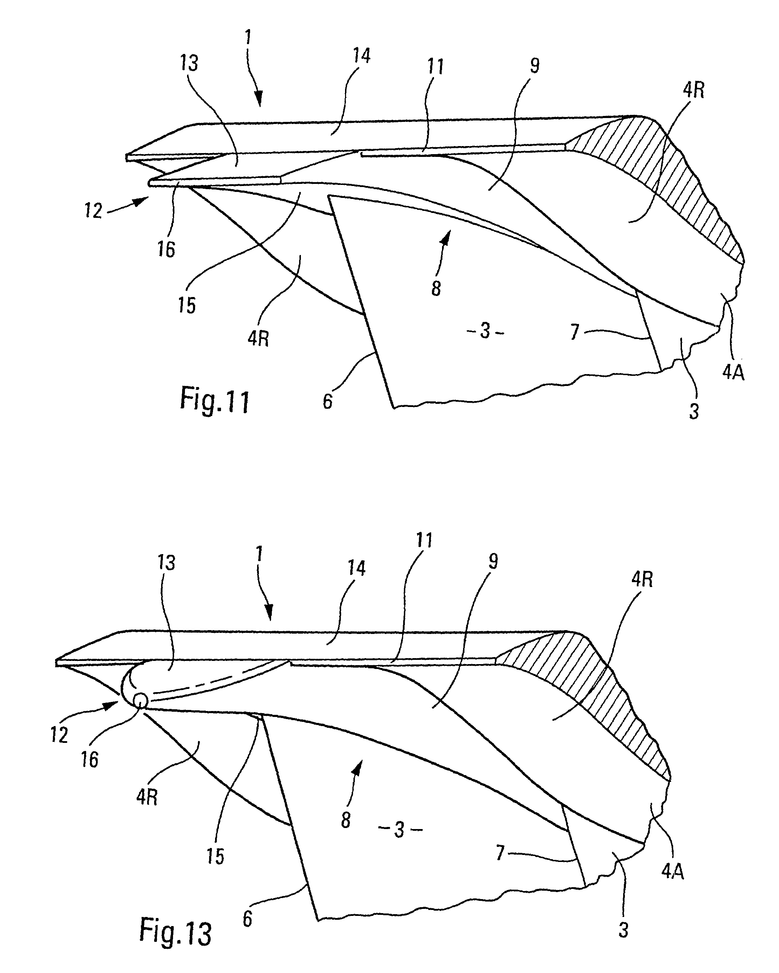

En revanche, dans la variante de réalisation des figures 12 et 13, les faces latérales 9 et 10 sont parallèles entre elles et en prolongement de la section 7 dans la partie du carénage 8 qui se trouve au contact de la partie arrière 4R de l'intrados 4, mais convergent l'une vers l'autre vers l'arrière dans la partie arrière saillante 12, au-delà du bord de fuite 11 de la voilure 1. Dans l'exemple représenté sur les figures 12 et 13, les faces 9 et 10 sont convexes dans leurs parties arrière convergentes et elles définissent un bord de fuite 16 au moins sensiblement ponctuel. Bien entendu, les parties arrière convergentes des faces 9 et 10 pourraient ne pas être convexes et le bord de fuite 16 qu'elles délimitent pourrait être allongé et, par exemple, rectiligne.

Grâce à la présente invention, on obtient donc un carénage 8 particulièrement plat et peu encombrant. Sur les figures 1, 2, 4 à 10 et 12, on a représenté en traits mixtes les contours du carénage connu PA, qu'il serait nécessaire de prévoir pour la voilure 1, à efficacité aérodynamique équivalente, vis-à-vis des risques de décollements des filets d'air au bord de fuite du mât et des problèmes de perte de portance.

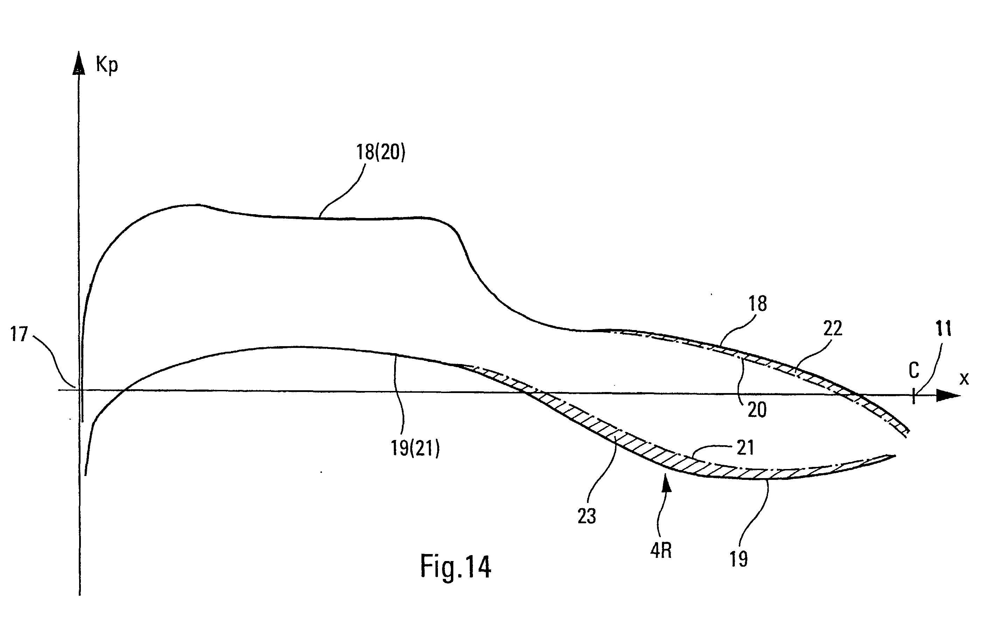

Par ailleurs, sur la figure 14, on a représenté, en fonction de la distance x le long de la corde C du profil de la voilure 1, comptée à partir du bord d'attaque 17 en direction du bord de fuite 11, la courbe 18 de variation du coefficient de pression Kp sur l'extrados 14 et la courbe 19 de variation dudit coefficient Kp sur l'intrados 4, pour l'ensemble pylône 3 - voilure 1 pourvu du carénage 8 décrit ci-dessus. A titre de comparaison, sur cette figure, on a tracé de plus les mêmes courbes 20 et 21 pour ledit ensemble pylône 3 - voilure 1, duquel ledit carénage 8 est éliminé. On voit aisément que, grâce au carénage 8 de l'invention, la portance dudit ensemble est augmentée, dans la partie arrière 4R de l'intrados, dans une proportion qui correspond à la somme des zones hachurées 22 et 23 représentées sur la figure 14.

## Revendications

1. Mât de suspension (3) de voilure d'aéronef, ladite voilure (1 ) comportant un intrados (4) dont la partie arrière (4R) est concave et en retrait par rapport à sa partie avant (4A) et ledit mât (3) :
- pouvant être suspendu à ladite voilure (1) en faisant saillie par rapport audit intrados (4) de la voilure (1) et étant profilé pour comporter, entre son bord d'attaque (5) et son bord de fuite (6), une section de largeur maximale (7) ; et
- étant pourvu d'un carénage (8) de réduction de perte locale de sustentation aérodynamique, qui :
. est apte à être disposé au contact de l'intrados (4) de ladite voilure (1) et s'étend en hauteur sur une partie dudit mât (3) ;
. s'étend vers l'arrière de la voilure (1), avec des faces latérales (9, 10) en prolongement aérodynamique de la section de largeur maximale (7) dudit mât (3); et
. se prolonge à l'arrière de la voilure (1 ), au-delà du bord de fuite (11 ) de celle-ci, par une partie arrière saillante (12) ayant une surface supérieure (13) en prolongement aérodynamique de l'extrados (14) de ladite voilure (1 ),
**caractérisé :**
- **en ce que** ladite section de largeur maximale (7) dudit mât (3) est disposée à l'avant de ladite partie arrière (4R), concave et en retrait, de l'intrados (4) de la voilure (1) ; et
- **en ce que** ledit carénage de réduction de perte locale de sustentation aérodynamique (8) :
. est apte à être logé, au moins pour la plus grande part de sa hauteur, dans la concavité de ladite partie arrière (4R) de l'intrados (4) de la voilure (1), et
. comporte une face inférieure (15) qui se rapproche de ladite surface supérieure (13) en prolongement aérodynamique de l'extrados (14) de la voilure (1 ) pour donner, à ladite partie arrière saillante (12) dudit carénage (8), la forme d'une lame s'amincissant vers l'arrière et terminée par un bord de fuite aérodynamique (16).

2. Mât de suspension selon la revendication 1,
**caractérisé en ce que** ladite face inférieure (15) dudit carénage (8) est concave.

3. Mât de suspension selon l'une des revendications 1 ou 2,
**caractérisé en ce que** les faces latérales (9, 10) de ladite partie arrière (12) du carénage (8) sont au moins approximativement en prolongement de la section de largeur maximale (7) dudit mât (3).

4. Mât de suspension selon l'une des revendications 1 ou 2,
**caractérisé en ce que** les faces latérales (9, 10) de ladite partie arrière (12) de carénage (8) convergent l'une vers l'autre en direction de l'arrière.

5. Mât de suspension selon l'une des revendications 3 ou 4,
**caractérisé en ce que** le bord de fuite aérodynamique (16) de ladite partie arrière (12) du carénage (8) est allongé.

6. Mât de suspension selon la revendication 4,
**caractérisé en ce que** le bord de fuite aérodynamique (16) de ladite partie arrière (12) du carénage (8) est au moins sensiblement ponctuel.

7. Mât de suspension selon la revendication 5,
**caractérisé en ce que** ledit bord de fuite aérodynamique (16) de ladite partie arrière (12) du carénage (8) est apte à être disposé au moins sensiblement parallèle au bord de fuite local (11) de la voilure (1).

8. Mât de suspension selon l'une des revendications 4 ou 6,
**caractérisé en ce que** lesdites faces latérales (9, 10) de ladite partie arrière (12) du carénage (8) sont convexes.

## Patentansprüche

1. Triebwerkgondelstiel (3) für einen Flugzeugflügel, wobei der genannte Flügel (1) eine Unterseite (4) umfasst, deren hinterer Teil (4R) konkav und in Bezug auf seine vordere Seite (4A) zurückgesetzt ist, wobei der Stiel (3)
- am genannten Flügel (1) aufgehängt werden kann, indem er in Bezug auf die Unterseite (4) des Flügels (1) vorsteht und mit einem Profil versehen ist, um zwischen seiner Vorderkante (5) und seiner Hinterkante (6) einen Abschnitt mit maximaler Breite (7) zu umfassen; und
- mit einer Verkleidung (8) zur Verringerung des örtlichen Verlusts an aerodynamischem Auftrieb versehen ist, die
• in Kontakt mit der Unterseite (4) des Flügels (1) angeordnet werden kann und sich in der Höhe über einen Teil des Stiels (3) erstreckt;
• sich mit den Seitenflächen (9, 10) in aerodynamischer Verlängerung des Abschnitts mit maximaler Breite (7) des Stiels (3) zum hinteren Teil des Flügels (1) hin erstreckt; und
• sich zum hinteren Teil des Flügels (1) hin über dessen Hinterkante (11) hinaus mit einem vorstehenden hinteren Teil (12) mit einer Oberfläche (13) in aerodynamischer Verlängerung der Saugseite (14) des Flügels (1) erstreckt,
**dadurch gekennzeichnet,**
- **dass** der genannte Abschnitt mit maximaler Breite (7) des Stiels (3) vom am genannten konkaven und zurückgesetzten hinteren Teil (4R) der Unterseite (4) des Flügels (1) angeordnet ist; und
- **dass** die Verkleidung zur Verringerung des örtlichen Verlusts an aerodynamischem Auftrieb (8)
• sich zumindest mit dem größten Teil ihrer Höhe in der Höhlung des hinteren Teils (4R) der Unterseite (4) des Flügels (1) befinden kann, und
• eine untere Fläche (15) umfasst, die sich an die genannte obere Fläche (13) in aerodynamischer Verlängerung des Saugseite (14) des Flügels (1) annähert, um dem hinteren vorstehenden Teil (12) der Verkleidung (8) die Form eines Blatts zu geben, das nach hinten dünner wird und in einer aerodynamischen Hinterkante (16) endet.

2. Triebwerkgondelstiel nach Anspruch 1,
**dadurch gekennzeichnet, dass** die untere Fläche (15) der Verkleidung (8) konkav ist.

3. Triebwerkgondelstiel nach Anspruch 1 oder 2,
**dadurch gekennzeichnet, dass** die Seitenflächen (9, 10) des hinteren Teils (12) der Verkleidung (8) zumindest annähernd in der Verlängerung des Abschnitts mit maximaler Breite (7) des Stiels (3) liegen.

4. Triebwerkgondelstiel nach Anspruch 1 oder 2,
**dadurch gekennzeichnet, dass** die Seitenflächen (9, 10) des hinteren Teils (12) der Verkleidung (8) nach hinten aufeinander zulaufen.

5. Triebwerkgondelstiel nach Anspruch 3 oder 4,
**dadurch gekennzeichnet, dass** die aerodynamische Hinterkante (16) des hinteren Teils (12) der Verkleidung (8) länglich ist.

6. Triebwerkgondelstiel nach Anspruch 4,
**dadurch gekennzeichnet, dass** die aerodynamische Hinterkante (16) des hinteren Teils (12) der Verkleidung (8) zumindest im Wesentlichen punktförmig ist.

7. Triebwerkgondelstiel nach Anspruch 5,
**dadurch gekennzeichnet, dass** die aerodynamische Hinterkante (16) des hinteren Teils (12) der Verkleidung (8) zumindest im Wesentlichen parallel zur örtlichen Hinterkante (11 ) des Flügels (1) angeordnet werden kann.

8. Triebwerkgondelstiel nach Anspruch 4 oder 6,
**dadurch gekennzeichnet, dass** die Seitenflächen (9, 10) des hinteren Teils (12) der Verkleidung (8) konvex sind.

## Claims

1. Aircraft wing structure suspension pylon (3), said wing structure (1) comprising a pressure face (4), the rear part (4R) of which is concave and set back with respect to its front part (4A) and said pylon (3):
- being capable of being suspended from said wing structure (1), projecting with respect to said pressure face (4) of the wing structure (1) and being profiled to comprise, between its leading edge (5) and its trailing edge (6), a section of maximum width (7); and
- being equipped with a fairing (8) for reducing the local loss of aerodynamic lift, which:
• is able to be placed in contact with the pressure face (4) of said wing structure (1) and extends heightwise over part of said pylon (3);
• extends towards the rear of the wing structure (1), with lateral faces (9,10) in aerodynamic continuation of the maximum-width section (7) of said pylon (3); and
• extends towards the rear of the wing structure (1), beyond the trailing edge (11) thereof, in the form of a proj ecting rear part (12) with an upper surface (13) in aerodynamic continuation of the suction face (14) of said wing structure (1),
**characterized:**
- **in that** said maximum-width section (7) of said pylon (3) is arranged at the front of said concave and set-back rear part (4R) of the pressure face (4) of the wing structure (1); and
- **in that** said fairing for reducing the local loss in aerodynamic lift (8):
• is able to be housed, at least over most of its height, in the concavity of said rear part (4R) of the pressure face (4) of the wing structure (1), and
• comprises an underside (15) which comes close to said upper surface (13), in aerodynamic continuation of the suction face (14) of the wing structure (1) so as to give said projecting rear part (12) of said fairing (8) the shape of a blade which tapers towards the rear and ends in an aerodynamic trailing edge (16).

2. Suspension pylon according to Claim 1,
**characterized in that** said underside (15) of said fairing (8) is concave.

3. Suspension pylon according to either of Claims 1 or 2,
**characterized in that** the lateral faces (9,10) of said rear part (12) of the fairing (8) are at least approximately in the continuation of the maximum-width section (7) of said pylon (3).

4. Suspension pylon according to either of Claims 1 or 2,
**characterized in that** the lateral faces (9,10) of said rear part (12) of the fairing (8) converge in the rearward direction.

5. Suspension pylon according to either of Claims 3 or 4,
**characterized in that** the aerodynamic trailing edge (16) of said rear part (12) of the fairing (8) is elongate.

6. Suspension pylon according to Claim 4,
**characterized in that** the aerodynamic trailing edge (16) of said rear part (12) of the fairing (8) is at least essentially localized to a point.

7. Suspension pylon according to Claim 5,
**characterized in that** said aerodynamic trailing edge (16) of said rear part (12) of the fairing (8) is able to be placed at least roughly parallel to the local trailing edge (11) of the wing structure (1).

8. Suspension pylon according to either of Claims 4 or 6,
**characterized in that** said lateral faces (9,10) of said rear part (12) of the fairing (8) are convex.
